# EUROPEAN PATENT APPLICATION

(11) **EP 4 342 695 A1**
(43) Date of publication of application: **27.03.2024**
(21) Application number: 23159705.5
(22) Date of filing: 02.03.2023
(51) Int. Cl.: B60G 17/016, B60G 17/018, B60G 17/08, B60G 17/019

(54) **SHOCK ABSORBER CONTROL METHOD AND APPARATUS, CONTROL DEVICE, VEHICLE, AND STORAGE MEDIUM**

(30) Priority: 26.09.2022 CN 202211172276
(71) Applicant: Chongqing Changan Automobile Co., Ltd., Chongqing 400023 (CN)
(72) Inventor: GU, Yangjian, Chongqing, 400023 (CN); ZHENG, Xiaoyong, Chongqing, 400023 (CN)
(74) Representative: Staeger & Sperling Partnerschaftsgesellschaft mbB

(57) **Abstract**

Provided are a shock absorber control method and apparatus, a control device, a vehicle, and a storage medium. The method includes: acquiring a current sensing signal group of a vehicle; judging whether signals in the sensing signal group all satisfy a preset trigger condition representing an influence on the operational stability of the vehicle; determining a first control parameter corresponding to a shock absorber of the vehicle according to the signals in the sensing signal group satisfying the preset trigger condition and a current working mode of the shock absorber when some or all of the signals in the sensing signal group satisfy the preset trigger condition; and controlling the operation of a solenoid valve of the shock absorber with the first control parameter to match a damping curve of the shock absorber with a current running state of the vehicle. In this way, the damping of the shock absorber can be adjusted flexibly according to the running state of the vehicle, thereby contributing to improving the driving and riding experience, and preventing the driving safety and the driving and riding experience from being affected by a single manner of adjusting the damping of the shock absorber.

## Description

### Field of the Invention

The present invention relates to the technical field of vehicle electronic control, and more particularly, to a shock absorber control method and apparatus, a control device, a vehicle, and a storage medium.

### Background of the Invention

Vehicle shock absorbers may attenuate the vibration of vehicles during vehicle running, thereby improving the comfort of occupants. Different damping curves of shock absorbers correspond to different driving and riding performances. Therefore, the change in the damping curves of the shock absorbers will bring different driving and riding experiences to the occupants. The conventional shock absorber cannot adjust the damping curve of the shock absorber, but an electronic control shock absorber may adjust the valve opening of a solenoid valve of the shock absorber and the damping of the shock absorber by adjusting current output to the solenoid valve of the shock absorber. In the conventional damping adjustment manner of the shock absorber, the damping cannot be adjusted flexibly in combination with the running state of the vehicle due to a single manner of adjusting the damping of the shock absorber.

### Summary of the Invention

In view of this, an object of embodiments of the present application is to provide a shock absorber control method and apparatus, a control device, a vehicle, and a storage medium, which can improve the problem of a single manner of adjusting the damping of a shock absorber.

In order to achieve the above technical object, the technical solution adopted by the present application is as follows:
In a first aspect, embodiments of the present application provide a shock absorber control method, including:
acquiring a current sensing signal group of a vehicle, the sensing signal group including at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal;
judging whether signals in the sensing signal group all satisfy a preset trigger condition representing an influence on the operational stability of the vehicle;
determining a first control parameter corresponding to a shock absorber of the vehicle according to the signals in the sensing signal group satisfying the preset trigger condition and a current working mode of the shock absorber when some or all of the signals in the sensing signal group satisfy the preset trigger condition, the current working mode including a first mode representing a comfort state, a second mode representing a standard state, and a third mode representing a motion state; and
controlling the operation of a solenoid valve of the shock absorber with the first control parameter to match a damping curve of the shock absorber with a current running state of the vehicle.

In conjunction with the first aspect, in some optional implementations, the method further includes:
controlling the operation of the solenoid valve of the shock absorber with a second control parameter corresponding to the current working mode when all the signals in the sensing signal group do not satisfy the preset trigger condition.

In conjunction with the first aspect, in some optional implementations, the method further includes:
changing the current working mode to a specified working mode based on a received operating instruction.

In conjunction with the first aspect, in some optional implementations, the method further includes:
acquiring a working current of the solenoid valve of each shock absorber on the vehicle; and
displaying the working current through a display screen of the vehicle.

In conjunction with the first aspect, in some optional implementations, the method further includes:
issuing a warning prompt when a deviation value between the working current of any one of the shock absorbers and a corresponding current value in the first control parameter exceeds a specified value.

In conjunction with the first aspect, in some optional implementations, the determining a first control parameter corresponding to a shock absorber of the vehicle according to the signals in the sensing signal group satisfying the preset trigger condition and a current working mode of the shock absorber when some or all of the signals in the sensing signal group satisfy the preset trigger condition includes:
determining a current value corresponding to each target signal as a first current value according to a corresponding relationship between signals and current values when some or all of the signals in the sensing signal group satisfy the preset trigger condition, the target signal being a signal in the sensing signal group satisfying the preset trigger condition;
acquiring a second current value corresponding to the current working mode according to a pre-stored corresponding relationship between modes and current values; and
taking a current value in the first current value and the second current value that maximizes the damping of the shock absorber as the first control parameter, based on a pre-stored corresponding relationship between current values and damping of the shock absorber.

In conjunction with the first aspect, in some optional implementations, the controlling the operation of a solenoid valve of the shock absorber with the first control parameter includes:
controlling an opening degree of the solenoid valve of the shock absorber to be matched with the first control parameter.

In conjunction with the first aspect, in some optional implementations, the acquiring a current sensing signal group of a vehicle includes:
acquiring the current sensing signal group of the vehicle within a preset period.

In a second aspect, embodiments of the present application also provide a shock absorber control apparatus, including:
an acquisition unit, configured to acquire a current sensing signal group of a vehicle, the sensing signal group including at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal;
a judgment unit, configured to judge whether signals in the sensing signal group all satisfy a preset trigger condition representing an influence on the operational stability of the vehicle;
a determination unit, configured to determine a first control parameter corresponding to a shock absorber of the vehicle according to the signals in the sensing signal group satisfying the preset trigger condition and a current working mode of the shock absorber when some or all of the signals in the sensing signal group satisfy the preset trigger condition, the current working mode including a first mode representing a comfort state, a second mode representing a standard state, and a third mode representing a motion state; and
a control unit, configured to control the operation of a solenoid valve of the shock absorber with the first control parameter to match a damping curve of the shock absorber with a current running state of the vehicle.

In a third aspect, embodiments of the present application also provide a control device, including a processor and a memory coupled to each other. The memory stores a computer program which, when executed by the processor, enables the control device to implement the above method.

In conjunction with the third aspect, in some optional implementations, the control device further includes a shock absorber. The shock absorber includes a shock-absorbing body and a solenoid valve provided at one end of the shock-absorbing body, the solenoid valve being electrically connected to the processor.

In a fourth aspect, embodiments of the present application also provide a vehicle, including a vehicle body and the above control device. The control device is provided on the vehicle body.

In a fifth aspect, embodiments of the present application also provide a computer-readable storage medium, having a computer program stored therein which, when executed on a computer, enables the computer to implement the above method.

The present invention using the above technical solution has the following advantages:
In the technical solution provided by the present application, at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal in a sensing signal group is first acquired. A first control parameter corresponding to a shock absorber of the vehicle is determined according to signals in the sensing signal group satisfying a preset trigger condition and a current working mode of the shock absorber when some or all of the signals in the sensing signal group satisfy the preset trigger condition. Then the operation of a solenoid valve of the shock absorber is controlled with the first control parameter. In the present solution, the solenoid valve of the shock absorber is controlled by combining running state parameters of the vehicle and the current working mode of the shock absorber. In this way, the damping of the shock absorber can be adjusted flexibly according to the running state of the vehicle, thereby contributing to improving the driving and riding experience, and preventing the driving safety and the driving and riding experience from being affected by a single manner of adjusting the damping of the shock absorber.

### Brief Description of the Drawings

The present application may be further illustrated by the non-limiting examples given in the accompanying drawings. It is to be understood that the following drawings only illustrate some of the embodiments of the present application and are therefore not to be considered as limitation to the scope. Those of ordinary skill in the art may also obtain other related drawings according to these drawings without creative work.
Fig. 1 schematically shows a module diagram of a control device according to an embodiment of the present application.
Fig. 2 schematically shows a structural diagram of a shock absorber according to an embodiment of the present application.
Fig. 3 schematically shows a flowchart of a shock absorber control method according to an embodiment of the present application.
Fig. 4 schematically shows a graph of the current, speed and damping of a shock absorber according to an embodiment of the present application.
Fig. 5 schematically shows a graph of a current change of a shock absorber according to an embodiment of the present application.
Fig. 6 schematically shows a block diagram of a shock absorber control apparatus according to an embodiment of the present application.

Reference numerals: 10-control device; 11-processing module; 12-storage module; 20-shock absorber; 21-damping body; 22-solenoid valve; 200-shock absorber control apparatus; 210-acquisition unit; 220-judgment unit; 230-determination unit; 240-control unit.

### Detailed Description of the Embodiments

The present invention will be described in detail below in conjunction with the drawings and specific embodiments. It is to be understood that the same reference numerals are used throughout the drawings or the description to refer to the same or like parts, and the implementations that are not illustrated or described in the drawings are forms known to those of ordinary skill in the art. In the description of the present application, the terms "first", "second", and the like are used for descriptive purposes only and are not to be construed as indicating or implying relative importance.

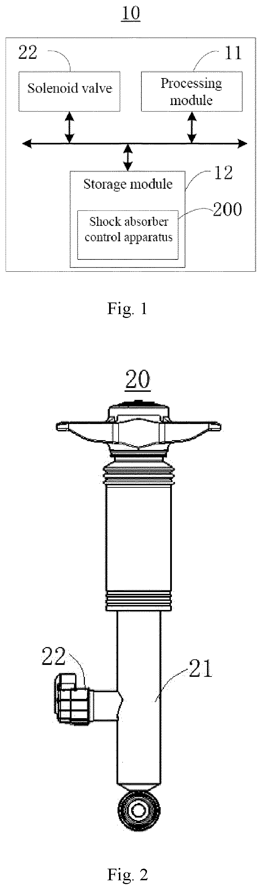

Referring to Fig. 1, embodiments of the present application provide a control device 10 that may include a processing module 11 and a storage module 12. The storage module 12 stores a computer program which, when executed by the processing module 11, enables the control device 10 to perform the corresponding steps of a shock absorber control method described below.

Referring to Figs. 1 and 2 in combination, the control device 10 may further include a shock absorber 20. The shock absorber 20 includes a shock-absorbing body 21 and a solenoid valve 22. The solenoid valve 22 is provided at one end of the shock-absorbing body 21, and the solenoid valve 22 is electrically connected to the processor.

The shock absorber 20 may achieve a shock-absorbing function by shock-absorbing oil in the shock-absorbing body 21. The processing module 11 may control an opening/closing degree of the solenoid valve 22 by controlling a working current of the solenoid valve 22, thereby adjusting the flow area of damping oil in the damping body 21 through the solenoid valve 22, and then adjusting the damping of the shock absorber 20. During the adjustment of the damping characteristics of the shock absorber 20, the drivability of the vehicle also changes, thereby presenting different riding styles on a vehicle.

The different flow areas of the solenoid valve 22 may produce different damping characteristics of the shock absorber. The solenoid valve 22 may adjust the amount of damping of the shock absorber 20 by adjusting the opening size of the valve. As the opening degree of the solenoid valve 22 is larger, the damping of the shock absorber 20 is smaller.

The association relationship between the working current of the solenoid valve 22 and the opening degree of the solenoid valve 22 or the damping of the shock absorber 20 may be flexibly set according to actual situations. For example, as the working current of the solenoid valve is larger, the opening degree of the solenoid valve 22 is larger, and an absolute value of the damping of the shock absorber 20 is smaller. Or, as the working current of the solenoid valve 22 is larger, the opening degree of the solenoid valve 22 is smaller, andan absolute value of the damping of the shock absorber 20 is larger. The manner in which the shock absorber 20 achieves shock absorption is conventional and will not be described in detail herein.

It will be appreciated that the structure of the control device 10 shown in Fig. 1 is merely a schematic structural diagram, and the control device 10 may include more assemblies than those shown in Fig. 1. For example, the control device 10 may also include a display screen for displaying the working current of the solenoid valve 22. The various assemblies shown in Fig. 1 may be implemented in hardware, software, or a combination thereof.

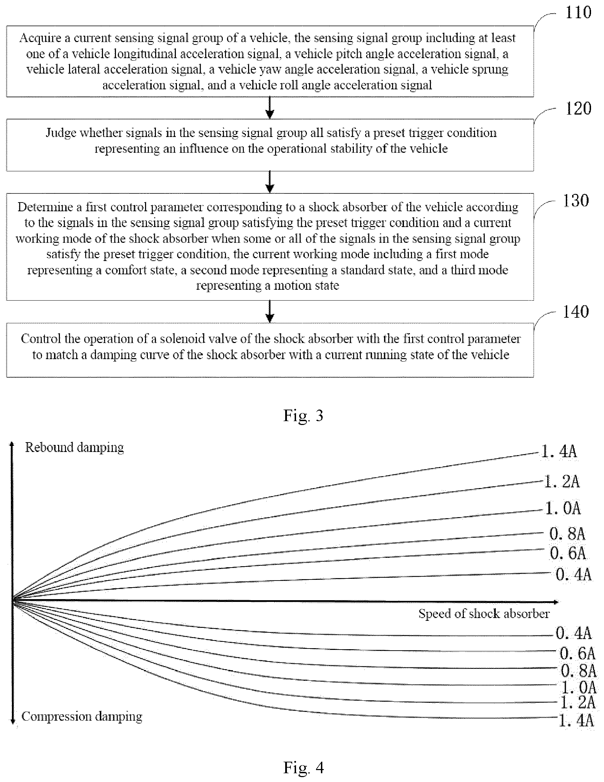

Referring to Fig. 3, the present application also provides a shock absorber control method that may be applied to the above control device 10. The steps of the method are performed or implemented by the control device 10. The shock absorber control method may include the following steps:
In step 110, a current sensing signal group of a vehicle is acquired. The sensing signal group includes at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal.
In step 120, it is judged whether signals in the sensing signal group all satisfy a preset trigger condition representing an influence on the operational stability of the vehicle.
In step 130, a first control parameter corresponding to a shock absorber of the vehicle is determined according to the signals in the sensing signal group satisfying the preset trigger condition and a current working mode of the shock absorber when some or all of the signals in the sensing signal group satisfy the preset trigger condition. The current working mode includes a first mode representing a comfort state, a second mode representing a standard state, and a third mode representing a motion state.
In step 140, the operation of a solenoid valve of the shock absorber is controlled with the first control parameter to match a damping curve of the shock absorber with a current running state of the vehicle.

Each step of the shock absorber control method will be described in detail as follows:
Step 110 may include: acquiring the current sensing signal group of the vehicle within a preset period.

In the present embodiment, the processing module may acquire a sensing signal group collected by a sensing assembly from a sensing assembly within a preset period. The sensing assembly may include a plurality of acceleration sensors for collecting a linear acceleration, and an angular velocity sensor for collecting an angular acceleration.

Signals that may be collected by the acceleration sensor include, but are not limited to, a vehicle longitudinal acceleration signal, a vehicle pitch angle acceleration signal, a vehicle lateral acceleration signal, and a vehicle sprung acceleration signal. Signals that may be collected by the angular velocity sensor may include, but are not limited to, a vehicle yaw angle acceleration signal and a vehicle roll angle acceleration signal.

The number and arrangement positions of the acceleration sensors and the angular velocity sensors may be set flexibly according to actual situations. In addition, the preset period may be flexibly determined according to actual situations. For example, the preset period may be a short period of 100 milliseconds, 500 milliseconds, etc.

Understandably, all the signals in the sensor signal group may be used to represent the motion state of the vehicle in three directions: vertical direction, longitudinal direction and lateral direction.

In step 120, each signal in the sensor signal group carries a value of acceleration, or angular velocity, or angular acceleration. The preset trigger condition may be a trigger condition that is a preset threshold corresponding to each signal. The preset thresholds of different signals may be flexibly set according to actual situations. When the value of the acceleration or angular acceleration carried by any one signal exceeds the corresponding preset threshold, it is considered that the signal satisfies the preset trigger condition. At this moment, it is usually represented that there is a safety risk in the running state of the vehicle, the operational stability of the vehicle is affected, and the running instability of the vehicle is likely to be caused. The operational stability refers to the combined characteristics of vehicle handling and stability.

If the value of the acceleration or angular acceleration carried by any one signal does not exceed the preset threshold, it is considered that the signal does not satisfy the preset trigger condition.

In step 130, the processing module may combine the signals that satisfy the preset trigger condition and the current working mode of the shock absorber of the vehicle to calculate a control parameter that matches the current running state. The control parameter is the first control parameter. In this way, it is possible to control the operation of the shock absorber using the first control parameter, thereby improving the problem of instability in the running of the vehicle, whereby the vehicle can run normally, and the influence on the operational stability of the vehicle is avoided.

In the working mode of the shock absorber, the comfort state, the standard state and the motion state may all be flexibly set according to actual situations. Understandably, a first mode (or referred to as a soft mode/comfort mode) corresponds to less damping than a second mode (or referred to as a medium mode/standard mode), and the second mode corresponds to less damping than a third mode (or referred to as a hard mode/motion mode). That is, among the three modes, the first mode corresponds to the minimum damping and the third mode corresponds to the maximum damping. The damping of the shock absorber corresponding to each working mode may be flexibly set according to actual situations. In addition, the damping for each mode refers to the maximum damping of the shock absorber in that mode.

Step 130 may include:
determining a current value corresponding to each target signal as a first current value according to a corresponding relationship between signals and current values when some or all of the signals in the sensing signal group satisfy the preset trigger condition, the target signal being a signal in the sensing signal group satisfying the preset trigger condition;
acquiring a second current value corresponding to the current working mode according to a pre-stored corresponding relationship between modes and current values; and
taking a current value in the first current value and the second current value that maximizes the damping of the shock absorber as the first control parameter, based on a pre-stored corresponding relationship between current values and damping of the shock absorber.

In the present embodiment, the valve opening of the solenoid valve is usually different at different working currents, and the damping of the shock absorber varies as the valve opening varies. Therefore, the control parameter (the first control parameter or the second control parameter) is a current value for controlling the operation of the solenoid valve.

The storage module may store a corresponding relationship between various modes and current values, and a corresponding relationship between various signals and current values in the form of a table in advance. For example, in the table, different current values corresponding to the first mode, the second mode, and the third mode, respectively, may be stored. In addition, in the table, it is also possible to store current values corresponding to various signals when the preset trigger condition is satisfied. When any signal satisfies the preset trigger condition, a current value corresponding to the signal may be acquired by looking up the table as a first current value. In addition, the processing module may also acquire a current value corresponding to the current working mode of the shock absorber by looking up the table as a second current value. The corresponding current values of each signal in the table may be flexibly set according to actual situations.

Illustratively, the vehicle longitudinal acceleration signal has a corresponding current value I₂₁=1.OA in the table.

The vehicle pitch angle acceleration signal has a corresponding current value I₂₂=1.2A in the table.

The vehicle lateral acceleration signal has a corresponding current value I₂₃=1.4A in the table.

If any signal does not satisfy the preset trigger condition, a current value corresponding to the signal is 0A.

In the present embodiment, the association relationship between the working current of the solenoid valve and the opening degree of the solenoid valve or the damping of the shock absorber may be set as shown in Fig. 4. That is, under the same boundary conditions, as the working current of the solenoid valve is larger, the opening degree of the solenoid valve is smaller, and the absolute value for the damping of the shock absorber is larger.

In step 130, after obtaining a first current value corresponding to the corresponding signal, and after obtaining a second current value corresponding to the current working mode, the processing module may select a maximum current value from the first current value and the second current value as a control parameter. The control parameter is the first control parameter, and may ensure that the damping corresponding to the selected current value is the maximum damping from the first current value and the second current value. In this way, by using the selected current value as the working current of the shock absorber, it is possible to avoid a small damping of the shock absorber from affecting the operational stability of the vehicle while satisfying the damping comfort as much as possible.

Step 140 may include: controlling an opening degree of the solenoid valve of the shock absorber to be matched with the first control parameter.

In step 140, the processing module may take the current value carried in the first control parameter as the working current of the solenoid valve and then power the solenoid valve with the working current to control the operation of the solenoid valve. There is a mapping relationship between the magnitude of the working current and the opening size of the solenoid valve or the maximum damping of the shock absorber.

The processing module may control the current operation in the parameter by controlling the solenoid valve. In this way, the opening degree of the solenoid valve reaches a specified opening degree corresponding to the current value. That is, the opening degree of the solenoid valve matches the currently required damping of the shock absorber, thereby avoiding instability in the running of the vehicle easily caused by too small damping of the shock absorber, and avoiding influence on the riding experience of occupants caused by too large damping of the shock absorber.

It is to be noted that a vehicle typically has multiple shock absorbers. There may be a difference in the control parameter corresponding to each shock absorber, and there is a corresponding relationship between each shock absorber and the control parameter. The manner in which the processing module acquires the control parameter of each shock absorber may be seen in step 130 described above and will not be described in detail herein. In addition, the processing module may control the operation of each shock absorber based on the control parameter of each shock absorber, whereby the shock absorption control of the entire vehicle suspension can be achieved.

As an optional implementation, the method may further include: controlling the operation of the solenoid valve of the shock absorber with a second control parameter corresponding to the current working mode when all the signals in the sensing signal group do not satisfy the preset trigger condition.

Understandably, if the values of the accelerations or angular accelerations of all the signals do not exceed the respective preset thresholds, it is indicated that the vehicle is in a normal running state, there is no safety risk in the running state, and the operational stability of the vehicle is not affected. At this moment, the current value corresponding to each signal is 0.

In addition, the processing module may obtain a current value corresponding to the current working mode as a second control parameter based on the corresponding relationship between modes and current values pre-stored in the storage module, and then power the solenoid valve with the current value so as to control the operation of the solenoid valve. In this way, the shock absorber may maintain operation in the current working mode. The storage module may record a currently enabled working mode of the shock absorber, and the current working mode may be the above first working mode, or the second working mode, or the third working mode, which is not specifically limited herein.

After a vehicle is started, a vehicle owner may change a working mode of a shock absorber according to actual requirements. For example, as an optional implementation, the method may further include: changing the current working mode to a specified working mode based on a received operating instruction.

Understandably, the vehicle owner may flexibly select any one of the above first working mode, second working mode and third working mode as the current working mode of the shock absorber through an operation interface of a center control display screen of the vehicle. In addition, after the vehicle is started, the vehicle owner may change the working mode of the shock absorber through the operation interface of the center control display screen. For example, the current working mode of the shock absorber of the vehicle is the first working mode, and the vehicle owner may select the second working mode to replace the first working mode through the operation interface.

When the vehicle owner performs corresponding selection manipulation on the operation interface of the center control display screen, the center control display screen will generate an operating instruction carrying a working mode to be replaced based on user expectation, and then the center control display screen sends the operating instruction to the processing module. After receiving the operating instruction, the processing module may parse to obtain a specified working mode carried in the operating instruction, and switch the working mode of the shock absorber to the specified working mode. The specified working mode may be flexibly determined according to actual situations, and will not be described in detail herein.

As an optional implementation, the method may further include:
acquiring a working current of the solenoid valve of each shock absorber on the vehicle; and
displaying the working current through a display screen of the vehicle.

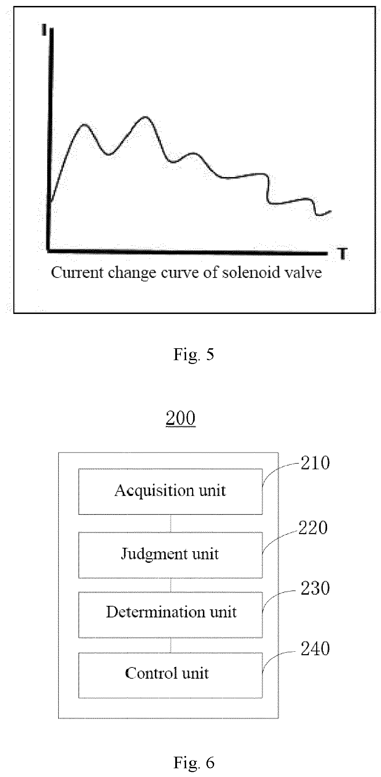

In the present embodiment, the vehicle may sense the working current of each solenoid valve through a current meter and send the sensed working current to the processing module. The processing module may present the working current of each shock absorber on the display screen in the form of a current graph. Illustratively, a graph of working current I of a solenoid valve on a shock absorber as a function of time T may be shown in Fig. 5. It is to be noted that the graph shown in Fig. 5 is only a schematic diagram of a current curve for one shock absorber. A schematic diagram of a current curve for each shock absorber may also be shown on the display screen. In this way, the occupants may observe the change in the magnitude of the control current of the shock absorber over time at any time, and can more intuitively and quantitatively experience the damping change of the shock absorber, so that the perception of a driver to the driving and riding performance of the vehicle can be improved, the feeling of the driver for vehicle driving and riding can be increased, and the intelligent level of the vehicle can be better presented to the driver.

As an optional implementation, the method may further include: issuing a warning prompt when a deviation value between the working current of any one of the shock absorbers and a corresponding current value in the first control parameter exceeds a specified value.

In the present embodiment, the working current of the shock absorber detected by the ammeter is the actual working current of the solenoid valve. The current value in the control parameter is a desired current of the solenoid valve. The above deviation value refers to an absolute value of the difference between the actual working current and the desired current. If the deviation value exceeds a specified value, it is also indicated that there is an abnormality in the actual working current of the solenoid valve. At this moment, the working of the shock absorber is usually abnormal.

When the deviation value exceeds the specified value, the processing module may issue a warning prompt via the display screen or a loudspeaker. Based on the prompt information, the vehicle owner may find abnormal detection situations in time, so as to facilitate the timely treatment or maintenance in view of the abnormal situations of the shock absorber.

Based on the above design, when it is detected that the trigger condition affecting safety and operational stability is triggered in the sensor signal group of the vehicle, a current value corresponding to the damping of the shock absorber which can improve the safety and operational stability of the whole vehicle is preferentially output, thereby improving the safety and operational stability of the running of the vehicle. If the trigger condition affecting safety and operational stability is not triggered, a current value corresponding to the damping of the shock absorber which accords with the driving intention of the driver is output. Therefore, the method according to the embodiments of the present application may balance the safety of the entire vehicle driving, the operational stability, and the driving intentions of drivers.

Referring to Fig. 6, the present application also provides a shock absorber control apparatus 200 that may be applied to the above control device. The shock absorber control apparatus 200 includes at least one software function module that may be stored in a storage module in the form of software or firmware or solidified in a control device operating system (OS). The processing module is configured to execute executable modules stored in the storage module, such as software function modules and computer programs included in the shock absorber control apparatus 200.

The shock absorber control apparatus 200 includes an acquisition unit 210, a judgment unit 220, a determination unit 230, and a control unit 240. The functions of each unit may be as follows:
The acquisition unit 210 is configured to acquire a current sensing signal group of a vehicle. The sensing signal group includes at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal.

The judgment unit 220 is configured to judge whether signals in the sensing signal group all satisfy a preset trigger condition representing an influence on the operational stability of the vehicle.

The determination unit 230 is configured to determine a first control parameter corresponding to a shock absorber of the vehicle according to the signals in the sensing signal group satisfying the preset trigger condition and a current working mode of the shock absorber when some or all of the signals in the sensing signal group satisfy the preset trigger condition. The current working mode includes a first mode representing a comfort state, a second mode representing a standard state, and a third mode representing a motion state.

The control unit 240 is configured to control the operation of a solenoid valve of the shock absorber with the first control parameter to match a damping curve of the shock absorber with a current running state of the vehicle.

Optionally, the acquisition unit 210 may be configured to acquire the current sensing signal group of the vehicle within a preset period.

Optionally, the determination unit 230 may be configured to: determine a current value corresponding to each target signal as a first current value according to a corresponding relationship between signals and current values when some or all of the signals in the sensing signal group satisfy the preset trigger condition, the target signal being a signal in the sensing signal group satisfying the preset trigger condition; acquire a second current value corresponding to the current working mode according to a pre-stored corresponding relationship between modes and current values; and take a current value in the first current value and the second current value that maximizes the damping of the shock absorber as the first control parameter, based on a pre-stored corresponding relationship between current values and damping of the shock absorber.

Optionally, the control unit 240 may be configured to control an opening degree of the solenoid valve of the shock absorber to be matched with the first control parameter.

Optionally, the control unit 240 may be further configured to control the operation of the solenoid valve of the shock absorber with a second control parameter corresponding to the current working mode when all the signals in the sensing signal group do not satisfy the preset trigger condition.

Optionally, the shock absorber control apparatus 200 may further include a mode changing unit, configured to change the current working mode to a specified working mode based on a received operating instruction.

Optionally, the acquisition unit 210 may be further configured to acquire a working current of the solenoid valve of each shock absorber on the vehicle. The control unit 240 may be further configured to display the working current through a display screen of the vehicle.

Optionally, the shock absorber control apparatus 200 may further include a prompt unit, configured to issue a warning prompt when a deviation value between the working current of any one of the shock absorbers and a corresponding current value in the first control parameter exceeds a specified value.

In the present embodiment, the processing module may be an integrated circuit chip having signal processing capabilities. The above processing module may be a general-purpose processor. For example, the processor may be a central processing unit (CPU), a digital signal processor (DSP), an application specific integrated circuit (ASIC), a field-programmable gate array (FPGA) or other programmable logic device, a discrete gate or transistor logic device, or a discrete hardware assembly, and may implement or perform the methods, steps and logic block diagrams disclosed in the embodiments of the present application.

The storage module may be, but is not limited to, a random access memory, a read-only memory, a programmable read-only memory, an erasable programmable read-only memory, an electrically erasable programmable read-only memory, etc. In the present embodiment, the storage module may be configured to store a preset trigger condition, a corresponding relationship between signals and current values, a corresponding relationship between modes and current values, etc. The storage module may also certainly be configured to store a program that is executed by the processing module upon reception of an execution instruction.

It is to be noted that for the convenience and conciseness of the description, those skilled in the art will clearly understand that the above-described specific working process of the control device may be referred to the corresponding processes of the various steps of the aforementioned method, and the detailed description thereof will not be repeated herein.

Embodiments of the present application also provide a computer-readable storage medium. The computer-readable storage medium has a computer program stored therein which, when executed on a computer, enables the computer to implement the shock absorber control method as described in the above embodiments.

From the description of the above implementations, those skilled in the art will clearly understand that the present application may be implemented by means of hardware, and may also be implemented by means of software plus a necessary general-purpose hardware platform. Based on this understanding, the technical solution of the present application may be embodied in the form of a software product which may be stored in a non-volatile storage medium (a CD-ROM, a U disk, a mobile hard disk, etc.), and includes a plurality of instructions to enable a computer device (a personal computer, a control device, or a network device, etc.) to implement the method described in various implementation scenarios of the present application.

In conclusion, embodiments of the present application provide a shock absorber control method and apparatus, a control device, a vehicle, and a storage medium. In the present solution, at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal in a sensing signal group is acquired, and it is detected whether any signal satisfies a preset trigger condition. A first control parameter corresponding to a shock absorber of the vehicle is determined according to signals in the sensing signal group satisfying the preset trigger condition and a current working mode of the shock absorber when some or all of the signals in the sensing signal group satisfy the preset trigger condition. Then the operation of a solenoid valve of the shock absorber is controlled with the first control parameter. In the present solution, the solenoid valve of the shock absorber is controlled by combining running state parameters of the vehicle and the current working mode of the shock absorber. In this way, the damping of the shock absorber can be adjusted flexibly according to the running state of the vehicle, thereby contributing to improving the driving and riding experience, and preventing the driving safety and the driving and riding experience from being affected by a single manner of adjusting the damping of the shock absorber.

In the embodiments provided in the present application, it is to be understood that the disclosed apparatus, system and method may be implemented in other ways. The apparatus, system and method embodiments described above are merely illustrative. For example, the flowcharts and block diagrams in the drawings illustrate the architecture, functionality and operation of possible implementations of systems, methods and computer program products according to various embodiments of the present application. In this regard, each block in the flowchart or block diagrams may represent a module, a program segment, or a portion of code, including one or more executable instructions for implementing specified logical functions. It is also to be noted that each block in the block diagrams and/or flowcharts, and combinations of blocks in the block diagrams and/or flowcharts, may be implemented by special purpose hardware-based systems which perform the specified functions or actions, or combinations of special purpose hardware and computer instructions. In addition, each function module in each embodiment of the present application may be integrated together to form a separate part, or each module may exist separately, or two or more modules may be integrated to form a separate part.

While the foregoing is directed to embodiments of the present application, it is not intended to limit the scope of the present application, and it will be apparent to those skilled in the art that various modifications and variations may be made in the present application. All changes, equivalents, improvements, etc. that come within the spirit and scope of the present application are intended to be embraced in the scope of the present application.

## Claims

1. A shock absorber control method, comprising:
acquiring a current sensing signal group of a vehicle, the sensing signal group comprising at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal;
judging whether signals in the sensing signal group all satisfy a preset trigger condition representing an influence on the operational stability of the vehicle;
determining a first control parameter corresponding to a shock absorber of the vehicle according to the signals in the sensing signal group satisfying the preset trigger condition and a current working mode of the shock absorber when some or all of the signals in the sensing signal group satisfy the preset trigger condition, the current working mode comprising a first mode representing a comfort state, a second mode representing a standard state, and a third mode representing a motion state; and
controlling the operation of a solenoid valve of the shock absorber with the first control parameter to match a damping curve of the shock absorber with a current running state of the vehicle.

2. The method according to claim 1, further comprising:
controlling the operation of the solenoid valve of the shock absorber with a second control parameter corresponding to the current working mode when all the signals in the sensing signal group do not satisfy the preset trigger condition.

3. The method according to claim 1, further comprising:
changing the current working mode to a specified working mode based on a received operating instruction.

4. The method according to any one of claims 1-3, further comprising:
acquiring a working current of the solenoid valve of each shock absorber on the vehicle; and
displaying the working current through a display screen of the vehicle.

5. The method according to claim 4, further comprising:
issuing a warning prompt when a deviation value between the working current of any one of the shock absorbers and a corresponding current value in the first control parameter exceeds a specified value.

6. The method according to claim 1, wherein the determining a first control parameter corresponding to a shock absorber of the vehicle according to the signals in the sensing signal group satisfying the preset trigger condition and a current working mode of the shock absorber when some or all of the signals in the sensing signal group satisfy the preset trigger condition comprises:
determining a current value corresponding to each target signal as a first current value according to a corresponding relationship between signals and current values when some or all of the signals in the sensing signal group satisfy the preset trigger condition, the target signal being a signal in the sensing signal group satisfying the preset trigger condition;
acquiring a second current value corresponding to the current working mode according to a pre-stored corresponding relationship between modes and current values; and
taking a current value in the first current value and the second current value that maximizes the damping of the shock absorber as the first control parameter, based on a pre-stored corresponding relationship between current values and damping of the shock absorber.

7. The method according to claim 1, wherein the controlling the operation of a solenoid valve of the shock absorber with the first control parameter comprises:
controlling an opening degree of the solenoid valve of the shock absorber to be matched with the first control parameter.

8. The method according to claim 1, wherein the acquiring a current sensing signal group of a vehicle comprises:
acquiring the current sensing signal group of the vehicle within a preset period.

9. A shock absorber control apparatus, comprising:
an acquisition unit, configured to acquire a current sensing signal group of a vehicle, the sensing signal group comprising at least one of a vehicle longitudinal acceleration signal, a vehicle pitch angle acceleration signal, a vehicle lateral acceleration signal, a vehicle yaw angle acceleration signal, a vehicle sprung acceleration signal, and a vehicle roll angle acceleration signal;
a judgment unit, configured to judge whether signals in the sensing signal group all satisfy a preset trigger condition representing an influence on the operational stability of the vehicle;
a determination unit, configured to determine a first control parameter corresponding to a shock absorber of the vehicle according to the signals in the sensing signal group satisfying the preset trigger condition and a current working mode of the shock absorber when some or all of the signals in the sensing signal group satisfy the preset trigger condition, the current working mode comprising a first mode representing a comfort state, a second mode representing a standard state, and a third mode representing a motion state; and
a control unit, configured to control the operation of a solenoid valve of the shock absorber with the first control parameter to match a damping curve of the shock absorber with a current running state of the vehicle.

10. A control device, comprising a processor and a memory coupled to each other, the memory storing a computer program which, when executed by the processor, enables the control device to implement the method according to any one of claims 1-8.

11. The control device according to claim 10, further comprising a shock absorber, the shock absorber comprising a shock-absorbing body and a solenoid valve provided at one end of the shock-absorbing body, the solenoid valve being electrically connected to the processor.

12. A vehicle, comprising a vehicle body and the control device according to claim 10 or 11, the control device being provided on the vehicle body.

13. A computer-readable storage medium, having a computer program stored therein which, when executed on a computer, enables the computer to implement the method according to any one of claims 1-8.
